# EUROPEAN PATENT APPLICATION

(11) **EP 4 707 133 A1**
(43) Date of publication of application: **11.03.2026**
(21) Application number: 25201251.3
(22) Date of filing: 09.09.2025
(51) Int. Cl.: B62D 25/02, B62D 27/02, B62D 25/20, B62D 27/06

(54) **IMPROVED BODY, CAB, VEHICLE AND RELATED MANUFACTURING METHOD**

(30) Priority: 09.09.2024 IT 202400020026
(71) Applicant: IVECO S.P.A., 10156 Torino (IT)
(72) Inventor: ACQUISTAPACE, Gianfranco, 10156 TORINO (IT)
(74) Representative: Studio Torta S.p.A.

(57) **Abstract**

Portion (3) of a body (2) for a vehicle (1) extending along a longitudinal axis (A), the portion (3) comprising an external portion (3a) and an internal portion (3b), the external portion (3a) defining a seat (4) delimited by an edge (5), the internal portion (3b) being housed in the seat (4) and being connected to the external portion (3a) by means of a mechanical connection.

## Description

### CROSS-REFERENCE TO RELATED APPLICATIONS

This patent application claims priority from Italian patent application no. 102024000020026 filed on September 9, 2024, the entire disclosure of which is incorporated herein by reference.

### TECHNICAL FIELD

The invention relates to a vehicle body portion, in particular for a vehicle cabin.

The invention preferably, though not exclusively applies to a commercial vehicles, such as trucks. Hereinafter reference will be made to this application by mere way of example.

### KNOWN STATE OF THE ART

As it is known, vehicles comprise a body that defines the spaces of the vehicle and is carried by the frame. A portion where the body most defines the shapes of the vehicle is the cabin.

The cabin, as it is known, is defined by a plurality of walls connected to one another and defining a space accommodating the driver of the vehicle. Between these walls, there is the floor of the vehicle.

The floor of the vehicle can define different heights for the driver due to the different configurations of the elements carried by the frame.

The floor therefore has a substantially unique shape that can change from configuration to configuration and is currently manufactured by forming one single piece or by welding different pieces together.

Clearly, these manufacturing methods are particularly expensive as they involve an almost handcrafted production that varies from vehicle to vehicle and from configuration to configuration.

Consequently, the production times and costs of a vehicle body for a cabin of a commercial vehicle are increased.

In addition, the bodies of existing cabins are particularly not versatile in the event of any changes to the vehicle configuration, making it necessary to replace them entirely due to the one-piece manufacturing operation or welding used.

Therefore, there is a need to provide bodies that can be produced faster and more economically, as well as to obtain bodies that can be as versatile as possible, that is, that can be used with minimal modifications on different vehicle configurations.

The object of the invention is to fulfil the needs discussed above in an optimized and economic fashion.

### SUMMARY OF THE INVENTION

The aforesaid object is reached by a body, a vehicle and a manufacturing method as claimed in the appended claims that are an integral part of this description.

### BRIEF DESCRIPTION OF THE DRAWINGS

The invention will be best understood upon perusal of the following detailed description of a preferred embodiment, which is provided by way of non-limiting example, with reference to the accompanying drawings, wherein:

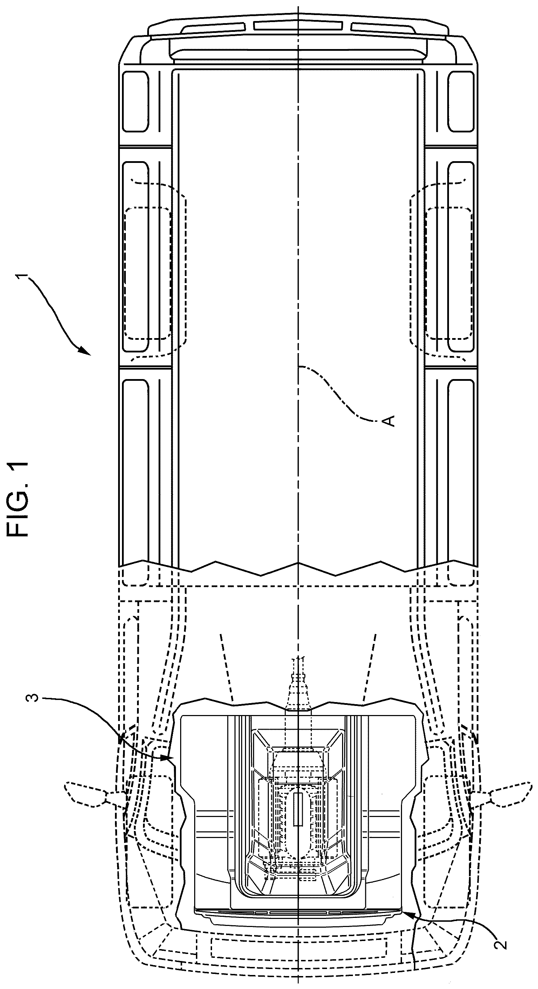

- Figure 1 is a top view of a body of a vehicle according to the invention;
- Figure 2 is an exploded perspective view of a body portion according to the invention in a first configuration;
- Figure 3 is an exploded perspective view of a body portion according to the invention in a first configuration; and
- Figures 4A, 4B, 4C are respective cross-sectional views of a body portion according to different embodiments.

### DETAILED DESCRIPTION OF THE INVENTION

In the accompanying figures, number 1 indicates, as a whole, a vehicle, such as a commercial vehicle, extending along a longitudinal axis A of its own.

The vehicle 1 comprises a body 2, carried by a frame of the vehicle movable on the ground and defining, among other things, a cabin of the vehicle. In particular, said body 2 comprises a portion 3 defining the floor of said vehicle cabin.

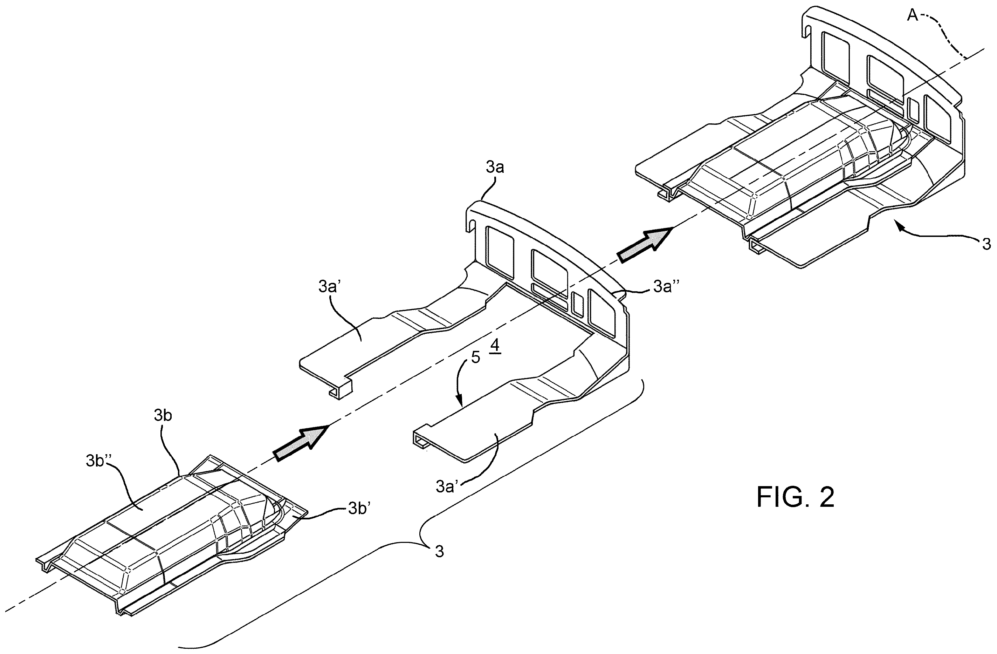

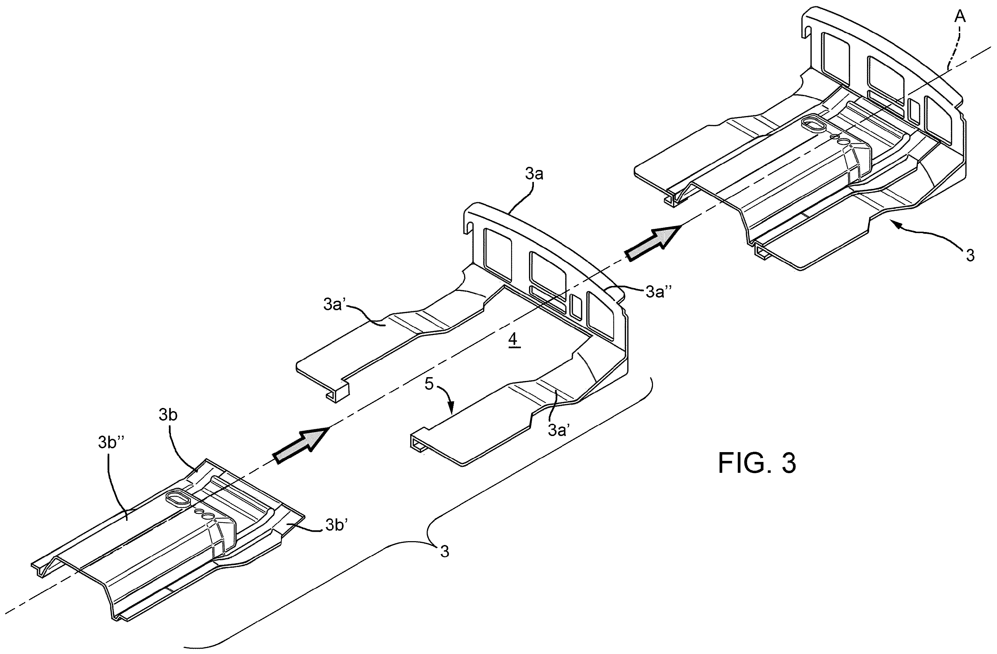

Figures 2 and 3 show two configurations of said body portion 3 defining a vehicle cabin floor.

As shown in the exploded portions of figures 2 and 3, the portion 3 comprises an external portion 3a and an internal portion 3b. The internal portion 3b is housed in a seat 4 defined by the external portion 3a and connected to it through a mechanical connection.

Advantageously, the external portion 3a is made of a metal material; the internal portion 3b can be made of a metal material, identical to or different from that of the external portion 3a, or of a completely different material, such as resins or plastics.

In detail, the external portion 3a comprises a pair of lateral portions 3a' extending along the longitudinal axis A of the vehicle, advantageously with the same shape and spaced apart from one another, transversely to the longitudinal axis A, by the seat 4.

These lateral portions 3a' basically comprise respective substantially planar and shaped walls, i.e. defining a profile with a potentially variable height along the longitudinal axis A.

Advantageously, the external portion 3a can comprise a vertical portion 3a" extending vertically relative to the lateral portions 3a' and joining them at an end thereof. In the case described herein, the lateral portions 3a' are connected at front end thereof relative to the driving direction of the vehicle 1.

Clearly, if not present, there could be provided a front portion, substantially coplanar to the lateral portions 3a', or a vertical portion 3a' arranged at the opposite end with respect to what described above.

In the embodiment described herein, the seat 4 is therefore delimited by the lateral portions 3a' transversely to the longitudinal axis A and, axially with respect thereto, by the vertical portion 3a'' and is open on the opposite side.

In particular, it is therefore delimited by an internal edge 5 having, according to this embodiment, the aforesaid shape of a rectangle open on a smaller side.

The internal portion 3b extends vertically, in the embodiments shown herein above the lateral portions 3a', and basically comprises a main portion 3b'' and a connecting portion 3b'.

The main portion 3b'' defines a specific shape for a vehicle type or a relative configuration, whereas the connecting portion 3b' is configured to allow the main portion 3b'' to be connected to the lateral portions 3a'.

In detail, the connecting portion 3b' comprises a flange extending substantially parallel to the lateral portions 3a', in the embodiment shown herein above them and, in use, in contact with them, and at least along part of the perimeter of the main portion 3b''.

In the embodiment described herein, the connecting portion 3b' is obtained on three sides of the main portion 3b', which substantially has the shape of a parallelepiped, so as to cooperate with the aforementioned mechanical connection with the internal edge 5 of the external portion 3a.

Advantageously, the mechanical connection is reversible.

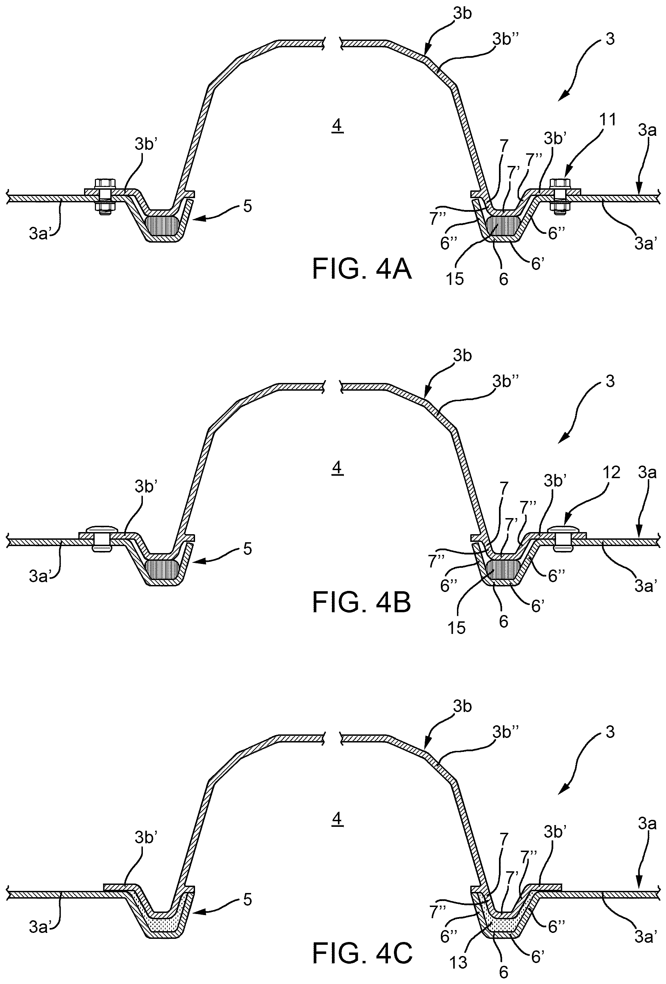

In the embodiments schematically shown in figures 4A to 4C, different embodiments of the mechanical connection mentioned above are shown.

In the first embodiment (Figure 4A) and in the second embodiment (Figure 4B), the mechanical connection comprises a threaded connection 11 (first embodiment), such as a screw/bolt connection or a rivet connection 12 (second embodiment), each configured to connect an end of the connecting portion 3b' to a portion adjacent to the internal edge 5, for example a portion adjacent to the seat 4 of the lateral portions 3a'.

In both the first and the second embodiment, the portion 3 can comprise sealing means 15, such as a gasket, operatively interposed between the internal portion 3b and the external portion 3a to avoid the passage of liquids and dirt from the ground towards the inside of the body 2.

Advantageously, in the embodiment described herein, the external portion 3a defines a groove 6, which is recessed relative to the remaining portion of the connecting portion 3b' and is designed to house said sealing means 15. Preferably, said groove 6 is obtained close to the opening 4, i.e. the internal edge 5, and in the area of the connecting portion 3b'.

The groove 6 preferably comprises a bottom wall 6' recessed relative to the remaining part of the external portion 3a and a pair of connecting walls 6'' connecting the bottom wall 6' to the aforementioned remaining part of the external portion 3a.

Advantageously, the connecting portion 3b' defines a protuberance 7 designed to be inserted into the groove 6 to cooperate in contact with the sealing means 15.

In the embodiment shown herein, the protuberance 7 comprises a bottom wall 7' and a pair of connecting walls 7'' having a shape similar to the one of the groove 6.

In the third embodiment (Figure 4C), the mechanical connection is a glued connection 13 obtained by means of a gluing material interposed between the connecting portion 3b' and the external portion 3a.

Advantageously, said gluing material is housed in the groove 6, which is present also in this case, and adheres to the protuberance 7, which is present also in this case.

The embodiment of the body portion, of the cabin and of the vehicle according to the invention, as described above, works as follows.

As shown in figures 2 and 3, it is possible to vary the internal portion 3b relative to the external portion 3a without having to modify the entire portion 3. As a result, any repairs or changes in configuration are facilitated.

According to the description above, the invention also relates to a method for manufacturing a body portion as described above, comprising the following steps:
i) Providing a standardized external portion 3a for different vehicle types and configurations;
ii) Selecting an internal portion 3b according to the vehicle type and configuration;
iii) Connecting the internal portion 3b to the external portion 3a through a mechanical connection.

Owing to the above, the advantages of a body, a cabin, a vehicle and a manufacturing method according to the invention are evident.

Thanks to the portion disclosed herein, it is possible to create different types of vehicle cabin and configuration of said cabin by only varying the internal portion.

In this way, production costs can be minimised both because of the reduction in the number of necessary pieces and because of the increased production speed.

At the same time, the possibility of varying the internal portion allows a high versatility. Furthermore, it is possible to use different materials, with consequent savings in terms of weight and/or increase in the strength of the cabin.

In addition, since it is not necessary to weld the elements, the manufacturing stations are significantly simplified and, therefore, the costs are further reduced.

Moreover, as mentioned above, it is possible to modify the configuration and allow for the replacement of the internal portion in an easy and economical way.

Finally, the body, the vehicle and the manufacturing method according to the invention can clearly be subjected to changes and variants, which, though, do not go beyond the scope of protection set forth in the appended claims.

As mentioned above, the embodiments discussed herein are mere examples and further mechanical connections, other than welding, can be used instead of those described herein.

Alternatively, the mechanical connections described above can be used in combination with one another, i.e. threaded connections and gluing or threaded connections and rivets or a combination of the three.

## Claims

1. Body (2) for a vehicle (1), said body (2) defining a cabin of said vehicle (1) and comprising a portion (3) defining a floor of said cabin, said portion (3) extending along a longitudinal axis (A), said portion (3) comprising an external portion (3a) and an internal portion (3b), said external portion (3a) defining a seat (4) delimited by an edge (5), said internal portion (3b) being housed in said seat (4) and being connected by means of a mechanical connection to said external portion (3a), said external portion (3) comprising sealing means (15) operatively interposed between said internal portion (3b) and said external portion (3a).

2. Body according to claim 1, wherein said mechanical connection comprises a threaded connection (11).

3. Body according to claim 1 or 2, wherein said mechanical connection comprises a rivet connection (12).

4. Body according to one of the previous claims, wherein said mechanical connection comprises a glued connection (13).

5. Body according to one of the previous claims, wherein said internal portion (3b) is made of a different material from said external portion (3a).

6. Body according to one of the previous claims, wherein one between said internal portion (3b) and said external portion (3a) defines a groove (6) and the other between said internal portion (3b) and said external portion (3a) defines a protuberance (7) housed in said groove (6), said sealing means (15) being housed in said groove (6) in contact with said protuberance (7).

7. Body according to claim 4, wherein one between said internal portion (3b) and said external portion (3a) defines a groove (6) and the other between said internal portion (3b) and said external portion (3a) defines a protuberance (7) housed in said groove (6), said gluing connection (13) being made by means of gluing material housed between said groove (6) and said protuberance (7).

8. Body according to one of the previous claims, wherein said seat (4) has a rectangular shape extending along said longitudinal axis (A).

9. Body according to one of the previous claims, wherein said external portion (3a) comprises a pair of lateral portions (3a') and said internal portion (3b) comprises a connecting portion (3b') placed, in use, in contact in a vertical direction with said lateral portions (3a').

10. Vehicle (1) comprising a body (2) according to one of the previous claims.

11. Method of manufacturing a portion (3) of body (2) according to one of claims 1 to 9, comprising the following steps:
i) Providing a standardized external portion (3a) for different vehicle types and configurations;
ii) Selecting an internal portion (3b) according to the vehicle type and configuration;
iii) Connecting the internal portion (3b) to the external portion (3a) via a mechanical connection.
